(19) Europäisches Patentamt

European Patent Office

Office européen des brevets

(11) **EP 0 885 159 B1**

(12) **EUROPEAN PATENT SPECIFICATION**

(45) Date of publication and mention
of the grant of the patent:
**26.04.2000 Bulletin 2000/17**

(21) Application number: **97906104.1**

(22) Date of filing: **19.02.1997**

(51) Int Cl.7: **B65G 21/22**

(86) International application number:
**PCT/EP97/00832**

(87) International publication number:
**WO 97/31846 (04.09.1997 Gazette 1997/38)**

(54) **LINK CHAIN GUIDE**

FÜHRUNG FÜR GLIEDERKETTE

GUIDE POUR CHAINE A ARTICULATIONS

(84) Designated Contracting States:
**DE FR GB IT**

(30) Priority: **29.02.1996 EP 96301395**

(43) Date of publication of application:
**23.12.1998 Bulletin 1998/52**

(73) Proprietors:
 • **UNILEVER N.V.**
  **3013 AL Rotterdam (NL)**
  Designated Contracting States:
  **DE FR IT**
 • **UNILEVER PLC**
  **London EC4P 4BQ (GB)**
  Designated Contracting States:
  **GB**

(72) Inventor: **JOHN REES, Jones**
  **Unilever Research Port Sunlight**
  **Wirral Merseyside L63 3JW (GB)**

(74) Representative: **van Gent, Jan Paulus**
  **Unilever NV,**
  **Patent Department**
  **P.O. Box 137**
  **3130 AC Vlaardingen (NL)**

(56) References cited:
  **US-A- 5 306 212**

**Description**

Field of the invention

This invention relates to a link chain guide, typically but not essentially for an endless chain conveyor, and also to a chain conveyor incorporating said guide.

Background to the Invention

When a chain of links wraps around the pitch circle of a chainwheel the links effectively form part of a regular polygon with an instantaneous transition to the straight line or catenary formed by the incoming links.

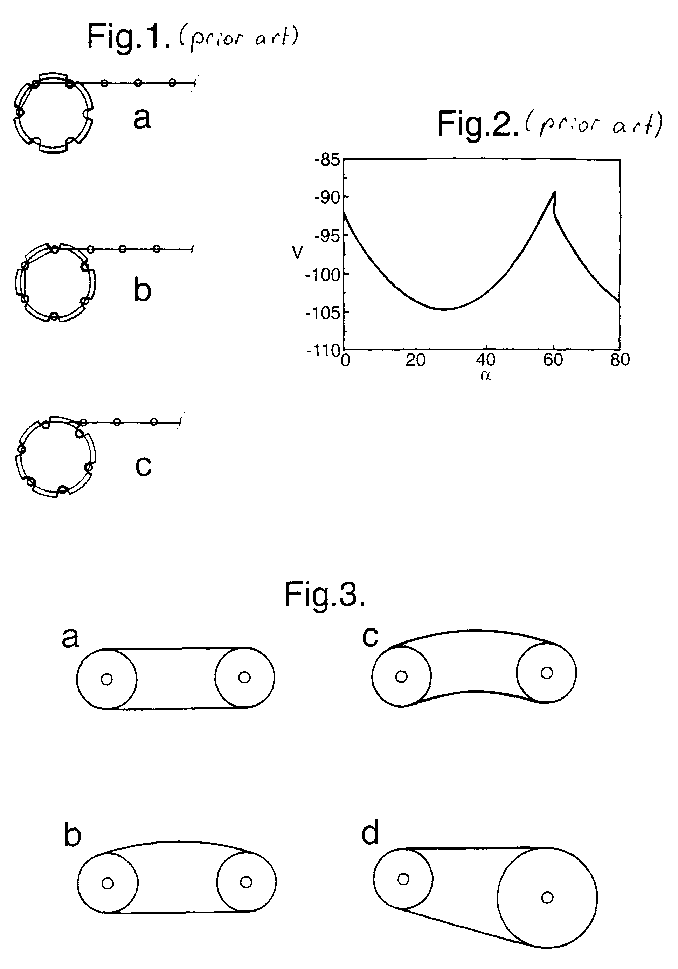

Figures 1a, b and c of the accompanying drawings show a sequence of steps in entry of a link chain onto a chainwheel. Three successive position of the chain in transition are depicted. The incoming chain links are pulled by the roller or pin that last engages a tooth space root of the chainwheel. As the chain rotates it causes the chain to lift and then fall during the controlling action of each succeeding tooth.

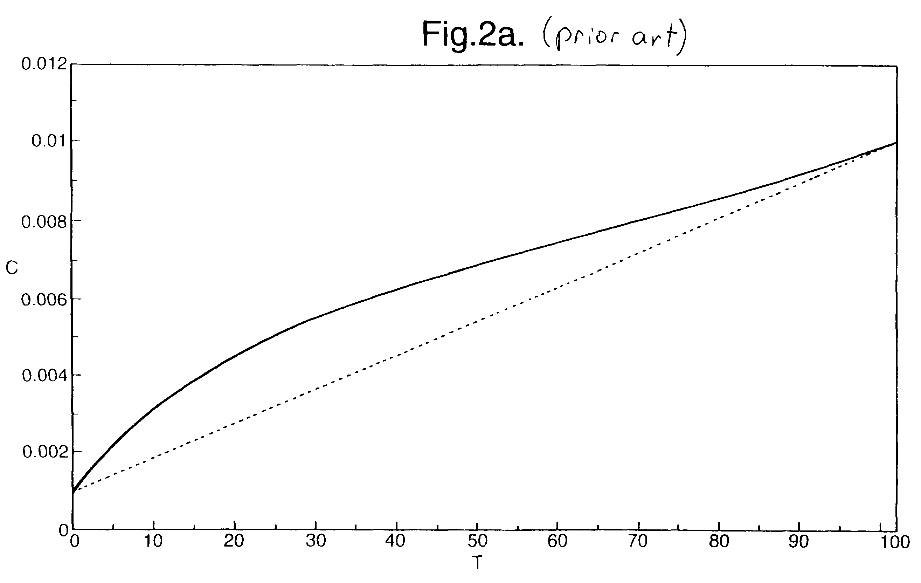

The velocity of the approaching chain links varies cyclically according to a law typified by the graph of velocity shown in Fig. 2, where the velocity of the in-coming chain, in terms of length/unit time, is plotted against the angle ($\alpha$) of rotation of the chain in degrees. The magnitude of the alternation depends upon the numbers of teeth in the uptaking or driving chainwheel and the angle or approach of the incoming chain. The velocity shown in Fig. 2 is the horizontal component of the in-coming roller. Under the valid assumption that the last chain roller to engage the chainwheel tooth space root is always the controlling one, then there is a resulting step change in the in-coming chain's velocity This is due to an asymmetry in the position of the relinquishing and recipient controlling roller. It manifests itself primarily as an impulse in angular velocity of the chain links setting up vibration along the incoming chain.

Chain drive suppliers recommend that not less than 19 teeth should be used to mitigate polygonal effects in high speed requirements. However, when the chain links involved are long, such a recommendation results in the necessity for large diameter chainwheels.

In applications such as in precision conveying where the chainwheels need to be small in diameter then polygonal or chordal effects are very disadvantageous.

Prior Art

Known from US Patent No. 5306212 is a transition path guide which substantially reduces but does not eliminate the chordal or polygonal effect arising when a link chain passes around a sprocket. A transition path is proposed wherein at least at the junction point where the transition path enters into the circular turning path around the sprocket, these two paths have a common tangent. It is also a requirement of the known transition path that the curvature of this path varies so that the difference between its radius of curvature and that of the circular turning path continually decreases from the said junction point. One particular transition path which meets these requirements is a clothoid or cornu spiral, defined by the equation $K=(L \times R)^{½}$.

In this case, the end points of the transition curve have a curvature (which may be zero) continuous with that of the linear or curved path of the chain beyond the ends of the transition path. However, the clothoid only partially eliminates chordal effects. Measured in terms of velocity fluctuation, in an example given for a sprocket wheel having 15 teeth ($\frac{15}{2}$ effective teeth), a minimum fluctuation of 2.6% is the best achievable.

The invention

According to one aspect of the present invention, there is provided a link chain guide for a link chain passing around at least one sprocket, wherein each chain link carries a guide means and at the region of entry of the chain into engagement with a sprocket wheel a cam profile is provided with which the guide means co-operates to cause the chain link entering into engagement with the sprocket to follow a transition path, characterised in that, in order to eliminate the chordal effect normally associated with link chains and sprockets, the transition path defined by the cam profile is computed to eliminate the chordal effect from the pitch circle (r) of the sprocket wheel, the parameter angle ($\alpha$) subtended by the chain link at its instantaneous centres in the initial position of its intended transition path, and the length (L) of the chain link, such that the speed ratio of joints engaging the chainwheel pitch circle and joints lying on the path of the link chain before reaching the intended transition path is constant.

Thus, the computed transition path permits a uniform velocity (zero acceleration) transmission, which enables the possibility of setting a constant pre-tension independent of position along the chain.

It follows, in contrast with the transmission path known from the prior art, that a velocity fluctuation of zero is achieved. Moreover, although the curves must meet, continuity of tangency in respect of curvature at the end points of the transition path is not essential, thereby affording a degree of freedom of design not available with the prior art transition path. However, continuity of tangency is a desirable constraint for practical purposes.

The difference between the prior art transition path is further clarified with reference to Figure 2A, in which the graphs of curvature(C)/travel(T) are shown in full line for the transition path in accordance with the invention (JRJ path) and in dotted line for a clothoid. The non-linear relationship of the curvature/travel graph applicable to the present invention is derived from a pair of simultaneous equations of second degree that are subject to a first order, velocity constraint. These are based on intersecting circles having moving centres, and of which the radii are the lengths of the chain links. In general, only one roller is in transition, although the transition path, uniquely for each situation, is computed for the condition where there is a roller at each end of the transition path. This also means that, unlike the prior art transition path, the path in accordance with the invention has a spanning chord equal to the length of one chain link.

In a typical embodiment, an endless chain passes around two or more sprockets, but the invention is also applicable, eg, to long chain hoists.

The invention also relates to a conveyor incorporating the above defined link guide.

Thus, the guide means on each chain link is preferably a guide roller, conveniently fixed to the link, and preferably engaging a cam profile on the inside of the radius of the link chain path. In general, therefore, the cam profile will lie on the inside of the chain link path, but it may move from the inside to the outside if at any point there is a change in the sense of curvature of the chain link path.

The invention can enable fewer links to be employed between sprockets than has hitherto been possible while nevertheless giving adequate performance.

The links are preferably interconnected by sealed needle rollers.

According to another aspect of the invention, there is provided an endless link chain conveyor for carrying articles on which a production task is to be performed by tasking means past which the articles are moved when the link chain is driven, characterised in that the link chain is guided on to spaced sprockets by link chain guide means as hitherto defined by the first aspect of the invention, and the chain is pretensioned with a tension which remains constant due to the elimination of chordal effects, whereby motion of the links past the tasking means takes place along a non-varying path.

Various advantages arise, as will be apparent hereinafter.

First, it is to be appreciated that it is because there is a non-varying tension in the link chain due to elimination of chordal effects that the link chain can be pre-loaded with a predetermined tension. If chordal effects are not eliminated, such preloading with tension would not readily be possible, as the system would tend to seize up or the chain would break.

The elimination of chordal effects also means that clearance in the bearings or the chain can be taken up and, because the chain will run without clearance in its bearings, the motion of the chain can be made totally precise and non-varying.

In conveying apparatus in which articles are conveyed past tasking means, a stepped advance of the articles, i.e. an indexed movement, is to be preferred, so that the tasking means acts on the articles while they are stationary. However, if, as is obviously preferred for manufacturing efficiency, indexing speed is made as fast as possible, vibrations are excited in the chain which makes it difficult for the tasking means to align accurately with the articles, because they are shaking from the induced vibration. Elimination of clearance in the bearings of the link chain, coupled with the predetermined tension with which the chain is preloaded, enables faster indexing, i.e. more rapid acceleration and deceleration of the chain movement, and thereby permits increased throughput. Acceleration and deceleration for indexing purposes is totally unrelated to the fact that the computed transition path for the chain permits a uniform velocity transmission due to the elimination of chordal effects.

Yet again, while a conventional chain drive would normally require at least 18 teeth per sprocket in order to minimise chordal effects, and even then not permit constant tension, as a result of the substantial elimination of chordal effects in the present invention there is no longer a minimum number of teeth required for the sprockets. In the present invention, therefore, the number of teeth per sprocket can be reduced to 10 or fewer, and is preferably only 6. The chain, in consequence, has much longer links than is usual for a given pitch circle diameter of the sprockets. In effect, in the preferred production apparatus in accordance with the invention, the number of links in the chain, relative to a conventional chain of comparable dimensions, is reduced by a factor of at least three, and the chain pitch, i.e. length of link, is increased by a factor of at least three. The number of chain bearings is thereby proportionately reduced and the space available for the bearings is increased.

Frequently, in conveying apparatus in which articles are conveyed past tasking means, materials and substances are involved which are of contaminating or abrasive nature, resulting in damage to and wear on the bearings if the material or substance can penetrate them. However, because more space is available for the bearings due to the use of longer links, the size of the bearings can be increased, making it possible for the bearings to be sealed, thus increasing the reliability and life of the chain drive.

Description of Embodiment

The invention is further described with reference to the accompanying drawings, in which:-

Figures 1 and 2 are explanatory diagrams described above (prior art);

Figure 3 shows some link chain configurations to which the invention is applicable;

Figures 4 to 7 are diagrams to aid understanding of the computations necessary to practise the invention;

Figures 8 to 10 are graphs accompanying the Appendices to the present specification;

Figures 11a, b and c show a link chain conveyor test rig for verification of the invention, respectively in side elevation, plan and end views;

Figure 12 shows one of the test rig sprockets; and

Figures 13a and 13b respectively show the left hand and right hand transistion curves for the test rig of Figure 11, incorporated into a guide plate.

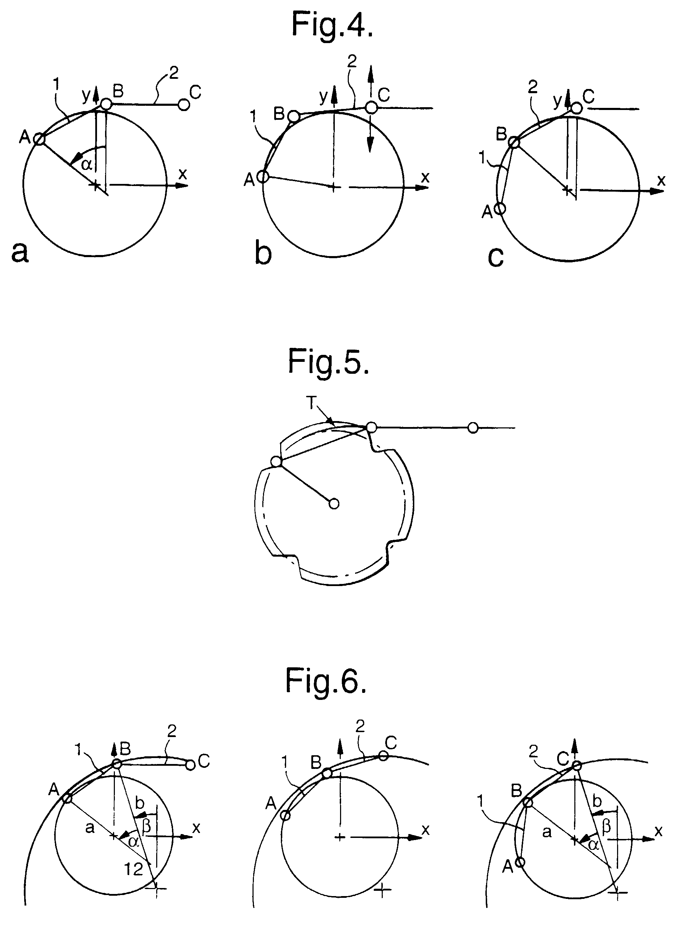

In precision chain conveying several configurations form potential for application of the link chain guide of the invention. These are based upon circular arcs and straight lines. Tracks or rails would be used to guide the chain rollers through the straight line or circular arc. Some differing possible layouts are shown in Figures 3a to 3d.

These figures show only the chainwheel pitch circle and the pitch line or arc constraining the chain-link's rollers In each case a transition profile in accordance with the invention is required at the join of the line or arc to the chainwheel pitch circle.

The schematics shown in Figure 3 represent variants of what could be modular transfer arrangements that could osculate with other linear or rotary motions. For example, the arc forms in b and c could be used in conjunction with a carousel rotary filler, to off load products.

For the purpose of the development of the basic geometry of the transition curves two variants are dealt with separately below. The first form is for the join of a straight line into the pitch circle of chainwheel. The second form is for a circular arc into the pitch circle of a chainwheel.

First, therefore, with reference to Figures 4a to 4c, consider two links, AB link 1 and BC link 2, of a chain joined at B. The joint C is running along a straight line parallel to the x axis and offset by $e$ in the $y$ direction. B is initially also on the straight line but about to start along the transition curve. A is in the pitch circle of the chainwheel. This condition, position 1, is shown in Figure 4a.

Figure 4b shows the condition where C is still on its straight line path. B is on its transition curve (undefined at this stage in the development of the theory) while A has progressed along the pitch circle of the chainwheel. This is position 2.

The third position of interest is when C has arrived at the original position of B. Here both B and A are on the pitch circle of the chainwheel.

C moves to B through the length L of one chain link. In the same time, $\tau$, pin A has moved through an arc of the pitch circle of the chainwheel. This arc subtends an angle

$$\phi = 2\,\frac{\pi}{n} \tag{1}$$

where n = number of teeth on the chainwheel.

Alternatively, where r = pitch circle radius of the chainwheel

$$\phi = 2\ \arcsin\left(\frac{L}{2r}\right) \tag{2}$$

In position 1 the link 2 will have its instantaneous centre at $\infty$ in the $y$ direction. The link 1 will have its instantaneous centre at $I_{12}$ defined by the intersection of the line through A and the wheel centre, at the origin of the $xy$ axes, and the line through B normal to the BC (or the straight line path of C). A, B and $I_{12}$ form a triangle with one of its sides being the link of length L. Let the other two sides be a and b and the angle contained by these be $\alpha$.

The ratio a:b is equal to the velocity ratio of A to B relative to ground and perpendicular to a and b respectively. For continuity of tangency this ratio must be

$$\frac{a}{b} = \frac{\phi r/\tau}{L/\tau} \qquad (3)$$

Where r = pitch circle radius of the chainwheel.

From triangle $ABI_{12}$

$$b^2 - 2ab \cos\alpha - L^2 + a^2 = 0$$

Solving for b we have:

$$b = \frac{L}{\sqrt{1 + \dfrac{a^2}{b^2} - 2\dfrac{a}{b}\cos\alpha}} \qquad (4)$$

If $\alpha$ is regarded as an independent design variable then $b$ can be found and then by substituting back into equation (3), a can be found In the third position the old $I_{12}$ becomes the new instant centre for link 3, this is $I_{13}$. Knowing $a$ then $x_{13}, y_{13,}$ the co-ordinates of the instantaneous centre $I_{13}$ can be found. Then

$$x_{13} = (a - r) \sin \alpha$$

and

$$y_{13} = -(a - r) \cos \alpha$$

Then the offset of the straight line is:

$$e = b + y_{13} \qquad (5)$$

For a given value of $\alpha$ the geometry is determined and the transition path of B can be calculated.

Knowing the initial condition from the earlier geometry then the co-ordinates of A and C are known functions of time $t$, that is

$$x_C = -st + (L + x_{13})$$

$$y_C = e$$

$$\qquad (6)$$

$$x_A = r \cos (\omega t + \alpha + 90)$$

$$y_A = r \sin (\omega t + \alpha + 90)$$

where $s$ is the linear velocity of the chain along the guideway and $\omega$ is the angular velocity of the chainwheel.

B is on the intersection of two circles, one with its centre at A and the other with its centre at C. The intersection is represented by the simultaneous equations:

$$(x\text{-}x_A)^2 + (y\text{-}y_A)^2 - L^2 = 0 \qquad\qquad (7)$$

$$(x\text{-}x_c)^2 + (y\text{-}y_c)^2 - L^2 = 0 \qquad\qquad (8)$$

On substitution from equation (6) these equations (7) and (8) become

$$(x - r\cos(\omega t + \alpha + 90))^2 + (y - r\sin(\omega t + \alpha + 90))^2 = L^2 \qquad\qquad (10)$$

$$(x + st - (L + x_{13}))^2 + (y - e)^2 = L^2$$

These are a simple implicit pair of equations in $x$, $y$ that represents the transition curve from a straight line guideway to the chainwheel pitch circle as a constraint function. An example transition path T is shown in Figure 5, for a 4-toothed sprocket.
Considering now the case where chain rollers are constrained to move around a circular arc and then transfer to a chainwheel, the chainwheel being either inside or outside the circular arc, it is again assumed that the transition is completed over the period that the link CB moves to take the place of BA. The geometry for the transition is depicted in Figures 6a to 6c in analogous manner to Figure 4.
The co-ordinate system $xy$ is fixed in the frame. The chainwheel is pivoted with its centre at the origin of the co-ordinate system $x_0$, $y_0$. Arbitrary parameters are:

   $n$ = number of teeth
   $\alpha$ = angle subtended by a link at its instantaneous centre when reaching the end of its transition path
   $R$ = radius of constraining arc on approach
   $L$ = link length

With these pre-specified parameters the calculation of the centre of the constraining arc $x_R$, $y_R$, can be made.
The links AB and BC are again numbered as 1 and 2, respectively. The start of a transition is with the two adjacent links lying such that joint A is on the chainwheel pitch circle while the other two joints B and C lie on the circular arc. The instantaneous centre of AB, $I_{12}$, lies on the intersection of the diameters of the circles containing the chainwheel and the constraining arc passing through A and B respectively. A triangle $I_{12}$, AB is formed, the sides of which are the chain link 1 of length $L$ and sides $a$ and $b$.
For continuity of tangency, the ratio $a{:}b$ has to be identically equal to the ratio of the pitch line velocities of the roller in the arc of approach to the velocity of the roller on the chainwheel.
Thus,

$$a/b = 2\pi r/n\psi R \qquad\qquad (11)$$

where $\psi$ is the angle subtended by a chord equal to a link length L at the centre of a circular arc of radius $R$. It is given by

$$\psi = 2\,\mathrm{aresin}\left(\frac{L}{2R}\right)$$

where $R$ = radius of the constraining arc on the incoming side.
Then the sides of the triangle $I_{12}$, AB can be calculated

$$b = \frac{L}{\sqrt{1 + \dfrac{a^2}{b^2} - 2\dfrac{a}{b}\cdot\cos(\alpha)}} \qquad\qquad (12)$$

and from this

$$a = \frac{2\pi br}{n\psi R}$$ (13)

Then the co-ordinates of the instantaneous centre $I_{12}$ can be found

$$x_{12}=(a-r)\sin(\alpha+\beta)$$

$$y_{12}=-(a-r)\cos(\alpha+\beta)$$

leading to the initial position of point B

$$x_B=x_{12}- b \sin \beta$$

$$y_B=y_{12}+ b \cos \beta$$

and the co-ordination of the centre of the

$$x_R=x_B+ R \sin \beta$$

$$y_R=x_B- R \cos \beta$$

The equations defining the transition curve again include equations (7) and (8) together with a velocity constraint for guideways of arc form. These collectively are

$$(x-x_A)^2 + (y-y_A)^2 - L^2 = 0$$ (7)

$$(x-x_C)^2 + (y-y_C)^2 - L^2 = 0$$ (8)

and

$$(\dot{x}_A^2 + \dot{y}_A^2) = (G)^2(\dot{x}_C^2 + \dot{y}_C^2)$$ (14)

where the dot denotes a derivative with respect to an independent variable and

$$G = \left(\frac{a}{b}\right) \quad ,$$

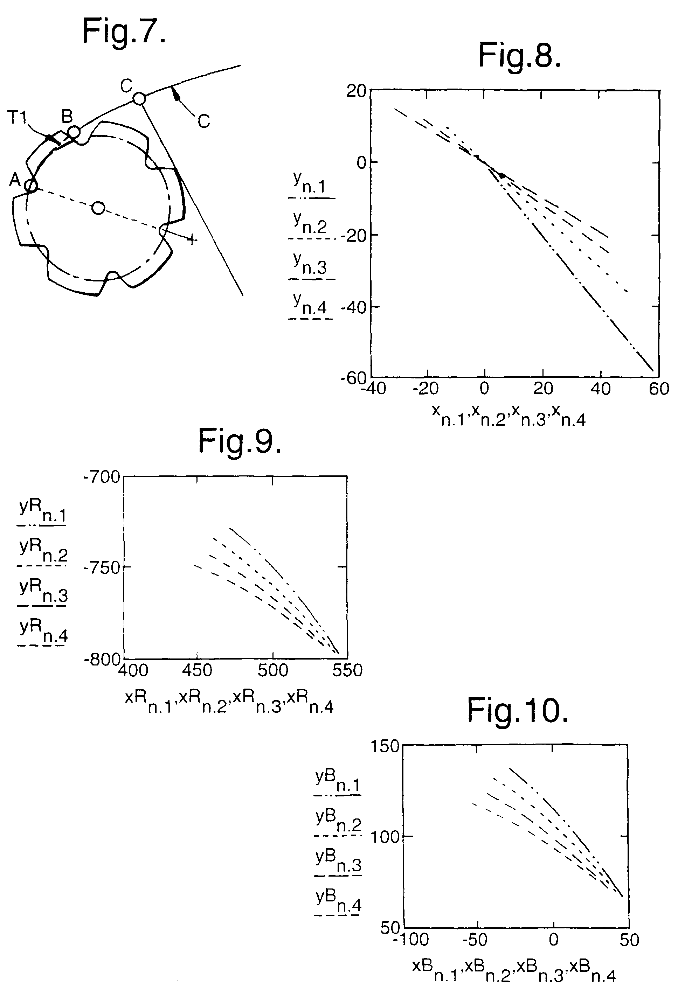

the ratio of the speed of a link pin around the chainwheel pitch circle to that along the guideway.
An example transition path $T_1$ is shown in Figure 7, for entry on to the sprocket from a circular path c.
From the foregoing, it will be understood how the required profile for the cam track employed in the present invention can be determined. It is also to be noted that, in addition to the dynamic benefits resulting from use of the computed transition path in accordance with the invention, the chain drive can be pre-loaded to eliminate backlash effects in the chain.
In practice, the required transition path, and thus the required curvature for the cam track, can be computed using two computer programs, one generally known as MATHCAD 5+ (from Mathsoft Inc., USA) and the other referred to herein as CAMLINKS (from Limacon, UK).

MATHCAD 5+ is used to calculate the initial co-ordinates, $x_A$, $y_A$, and $x_C$, $y_C$ and the offset $e$ or $x_R$, $y_R$, referred to in the foregoing. CAMLINKS is then used to generate the kinematic geometry and profile coordinates of the transition path, either from a straight conveyor path on to the sprocket or from a curved conveyor path on to the sprocket, using the foregoing equations (7), (8) and (14).

The two MATHCAD 5+ procedures are set out in Appendix 1 and Appendix 2, respectively, for the transition from a straight path onto the sprocket and for a curved path on to the sprocket. Appendix 1 makes reference to Figure 8 of the accompanying drawings and Appendix 2 makes reference to Figures 9 and 10.

The conveyor incorporating the link chain guide of the invention finds application in a wide variety of equipment, and is particularly useful where high speed, high accuracy conveying is required. One particular useful application envisaged is in high speed toothpaste filing equipment.

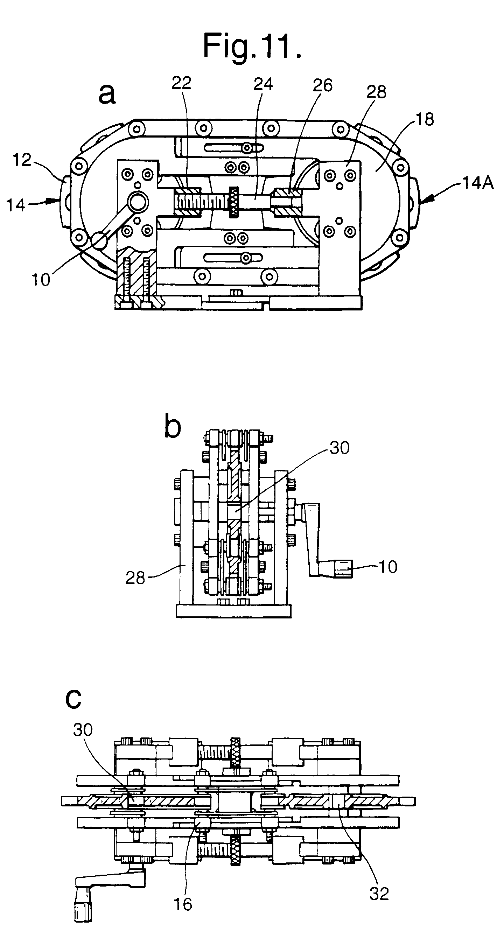

Figures 11a, b and c show a test rig incorporating an endless link chain conveyor in accordance with the invention. In this test rig, the conveyor is operable by a crank handle 10.

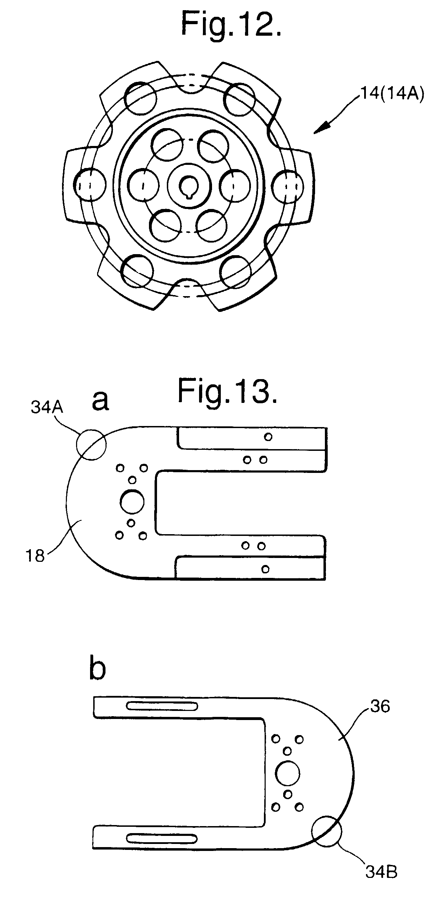

In the illustrated test rig, the endless link chain conveyor 12 moves around two similar sprockets 14, 14A, one of which is shown in detail in Figure 12. The chain links are interconnected by sealed needle rollers 16, which are not required to provide free play for variation in the relative instantaneous velocities of adjacent links.

The links, as by means of guide rollers, run on a guide plate 18 which at the left-hand and right-hand ends incorporates transition cam profiles which guide the chain links onto the sprocket along paths which completely eliminate chordal effects. These transition paths 20, 20A, indicated in Figures 13a and 13b, are computed in the manner hereinbefore described in accordance with the invention.

Means are incorporated for pre-loading the chain under tension. Reference 22 denotes a preload screw block, reference 24 a preload adjuster and reference 26 a preload slider block for the purpose. Due to the provision of the transition cam profiles, the tension in the chain remains wholly non-varying, and this contributes to a constant path of movement of the chain, even when links are entering into engagement with the sprockets.

It follows that articles (not shown) carried by the chain can be precisely positioned during operation of the conveyor for co-operation with tasking means (not shown) past which the articles are conveyed at tasking stations (not shown).

For completeness, in Figures 11a to 11c, reference 28 generally indicates the tower structure on which the link chain conveyor is supported, 30 indicates the conveyor drive shaft and 32 the driven shaft.

From Figure 12, it will be seen that each sprocket 14, 14a has only 6 teeth, whereas, in a conventional conveyor, at least 18 teeth would normally be required for chain links of the same length in order even to reduce chordal effects to an acceptable level.

In Figures 13a and 13b, references 34 and 34a respectively indicate the regions of the internal guide plate 18 at which the computed transition path constitutes the cam profile 20, 20A leading the link chain on to the sprockets to enable the total elimination of chordal effects in accordance with the invention.

In practical apparatus in which the long link chain is motor driven, the chain may be indexed one link at a time past tasking means acting upon articles carried by holders on the chain links, so that tasks can be performed on the articles while they are stationarily positioned along their precisely defined path of movement achieved by the elimination of chordal effects. An example is a chain conveyor carrying holders for toothpaste tubes to be filled and sealed by suitable taksing means. As toothpaste is abrasive, the fact that the invention facilitates the use of sealed bearings between the chain links is particularly advantageous. Moreover, the constant tension in the link chain facilitates high speed indexing with minimal risk of setting up vibrations along the length of the chain, whilst the use of long links running around sprockets with only a few teeth assists in achieving compactness of the machine.

## APPENDIX 1

### Transition From Straight Line to Chain Wheel Pitch Circle

Here the chain joins the chain wheel from a track that is a straight line. The design can start with a set of basic machine dimensions leaving the designer to select from another set of parameters.

The machine dimensions may be

$L$ = pitch length of chain

The parameters which can be left for the designers arbitration are:

$n$ = the number of teeth on the chainwheel

$\alpha$ = an arbitrary angle for the start

$m$ = is the counter of a finite number of values of $\alpha$ selected.

Given these chosen design parameters the aim is to calculate the offset of the straight line from the centre of the wheel. This would then complete the geometrical information from which the transition curve can be calculated using the equations given in the main text or, more easily, directly calculated by CAMLINKS.

The following values are used in illustrate the calculations involved in obtaining the offset

$L = 100$
$n = 3..8$
$m = 1..4$

Values of a are entered in degrees

$$\alpha\text{deg}_m =$$

| 45 |
|---|
| 54 |
| 60 |
| 64.2857 |

$$\alpha_m = \frac{\alpha\,\text{deg}_m}{180}\pi$$

The angle subtended by adjacent tooth (or roller) spaces at the centre of the chainwheel

$$\phi_n = \frac{2\pi}{n}$$

The ratio $a{:}b$ (see main text) is then given by

$$\text{aoverb}_n = \frac{\phi_n}{2\sin\left(\dfrac{\phi_n}{2}\right)}$$

The chain pitch circle radius is

$$r_n = \frac{L}{2\sin\left(\dfrac{\phi_n}{2}\right)}$$

| aoverb$_n$ | $r_n$ |
|---|---|
| 1.209 | 57.735 |
| 1.111 | 70.711 |
| 1.069 | 85.065 |
| 1.047 | 100 |

(continued)

| aoverb$_n$ $r_n$ | |
|---|---|
| 1.034 | 115.238 |
| 1.026 | 130.656 |

$$a_{n,m} = \text{aoverb}_n b_{n,m}$$

$$b_{n,m} = \frac{L}{\sqrt{[1 + (aoverb_n)^2] - 2.aoverb_n.\cos(\alpha_m)}}$$

$$x_{n,m} = (a_{n,m} - r_n).\sin(\alpha_m) \qquad y_{n,m} = -[(a_{n,m} - r_n)\cos(\alpha_m)]$$

$$\text{Offset}_{n,m} = b_{n,m} + y_{n,m}$$

The values of these parameters for the *m*=1..4 selection $\alpha$ and the n=3..8 teeth are given the respective columns and rows of the submatrices shown below

submatrix($a$,3,8,1,4)=

$$\begin{bmatrix} 139.432 & 118.534 & 108.026 & 101.73 \\ 136.42 & 115.302 & 104.814 & 98.566 \\ 134.576 & 113.563 & 103.161 & 96.975 \\ 133.462 & 112.558 & 102.224 & 96.081 \\ 132.754 & 111.934 & 101.646 & 95.533 \\ 132.28 & 111.521 & 101.266 & 95.173 \end{bmatrix}$$

submatrix ($b$,3,8,1,4)=

$$\begin{bmatrix} 115.309 & 98.027 & 89.337 & 84.13 \\ 122.822 & 103.809 & 94.366 & 88.741 \\ 125.895 & 106.237 & 96.506 & 90.719 \\ 127.447 & 107.485 & 97.617 & 91.751 \\ 128.342 & 108.214 & 98.268 & 92.358 \\ 128.906 & 108.677 & 98.684 & 92.746 \end{bmatrix}$$

submatrix ($x$,3,8,1,4)=

$$\begin{bmatrix} 57.768 & 49.187 & 43.553 & 39.638 \\ 46.464 & 36.075 & 29.534 & 25.097 \\ 35.01 & 23.055 & 15.672 & 10.731 \\ 23.661 & 10.5 & 1.926 & -3.531 \\ 12.385 & -2.073 & -11.771 & -17.754 \\ 1.148 & -15.481 & -25.452 & -31.969 \end{bmatrix}$$

submatrix $(y,3,8,1,4)=$

$$\begin{bmatrix} -57.768 & -35.737 & -25.146 & -19.089 \\ -46.464 & -26.21 & -17.052 & -12.086 \\ -35.01 & -16.75 & -9.048 & -5.168 \\ -23.661 & -7.382 & -1.112 & 1.7 \\ -12.385 & 1.942 & 6.796 & 8.55 \\ -1.148 & 11.247 & 14.695 & 15.396 \end{bmatrix}$$

submatrix (Offset $3,8,1,4)=$

$$\begin{bmatrix} 57.541 & 62.29 & 64.191 & 65.041 \\ 76.358 & 77.598 & 77.314 & 76.655 \\ 90.885 & 89.486 & 87.458 & 85.522 \\ 103.786 & 100.104 & 96.505 & 93.451 \\ 115.957 & 110.156 & 105.064 & 100.908 \\ 127.758 & 119.924 & 113.379 & 108.141 \end{bmatrix}$$

The graphs of the instant centre 12 at x, y each for a different a are shown in Figure 8.

**APPENDIX 2**

**Transition From Circular Arc to Chain Wheel Pitch Circle**

Here the chain joins the chain wheel from a track that is a circular arc. The design can start with a set of basic machine dimensions leaving the designer to select from another set of parameters

The given machine dimensions may be

$L$ = pitch length of chain
$R$ = radius of circular arc

The parameters which can be left for the designers arbitration are

$n$ = the number of teeth on the chainwheel
$\alpha$ = an arbitrary angle for the start
$m$ = is the counter of a finite number of values of $\alpha$ selected
$\beta$ = angle made by radius of B to the y axis

The following values are used in an example of the calculations involved:

$L$ = 100
$n$ = 3..8
$m$ = 1..4
$\beta = \frac{30}{180}\pi$ rads
$R$ = 1000

Values of $\alpha$ are entered in degrees

$$\alpha deg_m \; =$$

| 25 |
|----|
| 30 |
| 35 |
| 40 |

$$\alpha_m \; = \; \frac{\alpha \; deg_m}{180} \; \pi \; rads$$

The angle $\phi$ subtended by adjacent tooth (or roller) spaces at the centre of the chainwheel

$$\phi_n \; = \; \frac{2\pi}{n}$$

The angle $\psi$ subtended by the pitch length if a chain link lying on the constraining arc at the centre of the arc

$$\psi = 2\arcsin\left(\frac{L}{2R}\right)$$

The chain pitch circular radius is

$$r_n \; = \; \frac{L}{2\sin\left(\dfrac{\phi_n}{2}\right)}$$

The ratio $a:b$ (see main text) is then given by

$$aoverb_n \; = \; \frac{\phi_n r_n}{\psi R}$$

| aoverb$_n$ | r$_n$ |
|------------|-------|
| 1.209 | 57.735 |
| 1.11 | 70.711 |
| 1.069 | 85.065 |
| 1.047 | 100 |
| 1.034 | 115.238 |
| 1.026 | 130.656 |

and the values if a and b calculated thus

$$b_{n,m} = \frac{L}{\sqrt{[1 + (aoverb_n)^2] - 2 \cdot aoverb_n \cdot \cos(\alpha_m)}}$$

$$a_{n,m} = aoverb_n \cdot b_{n,m}$$

from which the co-ordinates that define the design geometry are

$x12_{n,m} = (a_{n,m} - r_n) \sin(\alpha_m + \beta)$     $y12_{n,m} = -[a_{n,m} - r_n) \cos(\alpha_m + \beta)]$

$xB_{n,m} = x12_{n,m} - b_{n,m} \sin(\beta)$     $yB_{n,m} = y12_{n,m} + b_{n,m} \cos(\beta)$

$xR_{n,m} = xB_{n,m} + R \sin(\beta)$     $yR_{n,m} = -yB_{n,m} - R \cos(\beta)$

Tables of values of these parameters are given below for the m value of $\alpha$ (columns) and number of chain wheel teeth (rows)

submatrix($xR$,3,8,1,4)=

| | | | |
|---|---|---|---|
| 547.019 | 540.202 | 533.554 | 527.212 |
| 529.336 | 521.7 | 514.618 | 508.065 |
| 513.22 | 505.183 | 497.797 | 491.022 |
| 498.35 | 489.86 | 482.08 | 474.982 |
| 484.194 | 475.17 | 466.92 | 459.432 |
| 470.446 | 460.83 | 452.059 | 444.136 |

submatrix($yR$,3,8,1,4)=

| | | | |
|---|---|---|---|
| -799.668 | -793.988 | -790.395 | -788.284 |
| -776.623 | -774.8 | -774.451 | -775.147 |
| -761.311 | -761.991 | -763.809 | -766.468 |
| -749.022 | -751.578 | -755.111 | -759.396 |
| -738.094 | -742.228 | -747.27 | -753.032 |
| -727.855 | -733.416 | -739.861 | -747.024 |

submatrix($x12$,3,8,1,4)=

| | | | |
|---|---|---|---|
| 143.236 | 122.689 | 105.668 | 91.277 |
| 135.888 | 111.553 | 92.351 | 76.638 |
| 123.674 | 97.871 | 77.741 | 61.405 |
| 110.622 | 83.904 | 63.106 | 46.267 |
| 97.451 | 69.967 | 48.556 | 31.231 |
| 84.297 | 56.088 | 34.073 | 16.258 |

submatrix($y$12,3,8,1,4)=

$$\begin{bmatrix} -100.295 & -70.834 & -49.274 & -33.222 \\ -95.15 & -64.405 & -43.064 & -27.894 \\ -86.597 & -56.506 & -36.251 & -22.35 \\ -77.458 & -48.442 & -29.427 & -16.84 \\ -68.236 & -40.396 & -22.642 & -11.367 \\ -59.025 & -32.382 & -15.889 & -5.918 \end{bmatrix}$$

submatrix ($x$B,3,8,1,4)=

$$\begin{bmatrix} 47.019 & 40.202 & 33.554 & 27.212 \\ 29.336 & 21.7 & 14.618 & 8.065 \\ 13.22 & 5.183 & -2.203 & -8.978 \\ -1.65 & -10.14 & -17.92 & -25.018 \\ -15.806 & -24.83 & -33.08 & -40.568 \\ -29.554 & -39.17 & -47.941 & -55.864 \end{bmatrix}$$

submatrix ($y$B,3,8,1,4)=

$$\begin{bmatrix} 66.358 & 72.038 & 75.631 & 77.742 \\ 89.403 & 91.226 & 91.575 & 90.878 \\ & & & \\ 104.714 & 104.034 & 102.216 & 99.558 \\ 117.003 & 114.448 & 110.914 & 106.629 \\ 127.932 & 123.797 & 118.755 & 112.994 \\ 138.17 & 132.609 & 126.165 & 119.002 \end{bmatrix}$$

Graphs of the co-ordinates of the arc centre at R and the design position of the joint B are shown in Figures 9 and 10

**Claims**

1. A link chain guide for a link chain passing around at least one sprocket, wherein each chain link carries a guide means and at the region of entry of the chain into engagement with a sprocket wheel a cam profile is provided with which the guide means co-operates to cause the chain link entering into engagement with the sprocket to follow a transition path, characterised in that, in order to eliminate the chordal effect normally associated with link chains and sprockets, the transition path defined by the cam track is computed to eliminate the chordal effect from the pitch circle radius (r) of the sprocket wheel, the parameter angle ($\alpha$) subtended by the chain link at its instantaneous centres in the initial position of its intended transition path, and the length (L) of the chain link, such that the speed ratio of joints engaging the chainwheel pitch circle and joints lying on the path of the link chain before reaching the intended transition path is constant.

2. A link chain guide according to claim 1, wherein, for a link to be guided from a straight line path of movement onto the sprocket, the transition path is computed, in Cartesian co-ordinates, in accordance with the equations:-

$$(x - r \cos (\omega t + \alpha + 90))^2 + (y - r \sin (\omega t + \alpha + 90))^2 = L^2$$

$$(x+st - (L+x_{13}))^2 + (y-e)^2 = L^2$$

3. A link chain guide according to claim 1, wherein the transition path is computed, for a link to be guided from a straight line path of movement onto the sprocket, in accordance with the method given in Appendix 1 hereinbefore set forth.

4. A link chain guide according to claim 1, wherein the transition path is computed, for a link to be guided from a curved path of movement onto the sprocket, in accordance with the method given in Appendix 2 hereinbefore set forth or with the simultaneous constraint equations

$$(x - x_A)^2 + (y - y_A)^2 - L^2 = 0$$

$$(x - x_C)^2 + (y - y_C)^2 - L^2 = 0$$

and

$$(\dot{x}_A^2 + \dot{y}_A^2) = (G)^2(\dot{x}_C^2 + \dot{y}_C^2)$$

where the dot denotes a derivative with respect to an independent variable.

5. A link chain conveyor incorporating the link chain guide of any one of claims 1 to 4, wherein the guide means on each chain link is a guide roller.

6. A link chain conveyor according to claim 5, wherein the guide roller is fixedly mounted to each chain link.

7. A link chain conveyor according to any one of claims 1 to 6, wherein the cam profile is positioned inside the path of movement of the chain.

8. A link chain conveyor according to any one of claims 1 to 7, having links interconnected by sealed needle rollers.

9. A link chain conveyor according to any of claims 1 to 8, wherein the chain is pretensioned.

10. An endless link chain conveyor for carrying articles on which a production task is to be performed by tasking means past which the articles are moved when the link chain is driven, characterised in that the link chain is guided on to spaced sprockets by a link chain guide according to any one of claims 1 to 4 for eliminating chordal effects, and the chain is pretensioned, whereby motion of the links past the tasking means takes place along a non-varying path.

11. Apparatus according to claim 10, wherein at least one sprocket is a drive sprocket for driving the link chain.

12. Apparatus according to claim 10 or 11, wherein each sprocket has less that ten teeth.

13. Apparatus according to claim 12, wherein each sprocket has six teeth.

14. Apparatus according to claim 12 or 13, wherein the links of the chain are sufficiently long that the maximum number of chain links engaging a sprocket at any one time is four.

15. Apparatus according to any one of claims 10 to 14, wherein the long links of the link chain are interconnected via sealed bearings.

16. Apparatus according to any one of claims 10 to 15, wherein the link chain is indexed in steps of one chain link length past the tasking means.

**17.** Apparatus according to claim 16, wherein the tasking means acts on the articled carried by the link chain while the chain link is stationary between indexing steps.

**18.** Apparatus according to any one of claims 10 to 17, wherein the link chain carries guide means constituted by rollers which run on the cam profile.

**19.** Apparatus according to any one of claims 10 to 18, wherein a cam plate has a generally straight section, a circular section at each sprocket, and a curved transition section interconnecting the straight section with the circular section at each sprocket, the curved transition section constituting said cam profile.

**20.** Apparatus according to claim 18 or 19, wherein the cam profile lies on the interior of the endless chain link path.

**21.** Apparatus according to any one of claims 10 to 20, wherein the chain links carry holders for tubes for filling with toothpaste and subsequent sealing by the tasking means.

**Patentansprüche**

**1.** Gliederkettenführung für eine um mindestens ein Kettenrad herumtretende Gliederkette, bei der jedes Kettenglied eine Führungseinrichtung trägt und im Bereich des Ineingrifftretens der Kette mit einem Kettenrad ein Steuerkurvenprofil vorgesehen ist, mit dem die Führungseinrichtung zusammenwirkt, um zu bewirken, dass das mit dem Kettenrad in Eingriff tretende Kettenglied einem Übergangspfad folgt, dadurch gekennzeichnet, dass zur Beseitigung des normalerweise mit Gliederketten und Kettenrädern verbundenen Sehnen-Effects der durch das Steuerkurvenprofil definierte Übergangspfad berechnet wird, um den Sehnen-Effekt zu beseitigen, aus dem Teilkreis ($r$) des Kettenrades, dem Parameterwinkel ($\alpha$), der dem Kettenglied an seinem momentanen Mittelpunkt in der Ausgangsposition seines vorgesehenen Übergangspfades gegenüberliegt, und der Länge ($L$) des Kettengliedes, so dass das Geschwindigkeitsverhältnis von Verbindungen im Eingriff mit dem Kettenradteilkreis und vor dem Erreichen des vorgesehenen Übergangspfades auf dem Pfad der Gliederkette liegenden Verbindungen konstant ist.

**2.** Gliederkettenführung nach Anspruch 1, bei welcher für ein Glied, das von einem geradlinigen Bewegungspfad auf das Kettenrad geführt werden soll, der Übergangspfad in kartesischen Koordinaten gemäß den Gleichungen

$$(x - r\cos(\omega t + \alpha + 90))^2 + (y - r\sin(\omega t + \alpha + 90))^2 = L^2$$

$$(x + st - (L + x_{13}))^2 + (y - e)^2 = L^2$$

berechnet wird.

**3.** Gliederkettenführung nach Anspruch 1, bei welcher der Übergangspfad für ein Glied, das von einem geradlinigen Bewegungspfad auf das Kettenrad geführt werden soll, gemäß dem Verfahren berechnet wird, das in dem vorgenannten Anhang 1 angegeben ist.

**4.** Gliederkettenführung nach Anspruch 1, bei welcher der Übergangspfad für ein Glied, das von einem gekrümmten Bewegungspfad auf das Kettenrad geführt werden soll, gemäß dem Verfahren berechnet wird, das in dem vorgenannten Anhang 2 angegeben ist, oder mit den gleichzeitigen einschränkenden Gleichungen

$$(x - x_A)^2 + (y - y_A)^2 - L^2 = 0$$

$$(x - x_C)^2 + (y - y_C)^2 - L^2 = 0$$

und

$$(\dot{x}_A{}^2 + \dot{y}_A{}^2) = (G)^2(\dot{x}_C{}^2 + \dot{y}_C{}^2)$$

wobei der Punkt eine Ableitung bezüglich einer unabhängigen Variablen bezeichnet.

5. Gliederkettenförderer, enthaltend die Gliederkettenführung nach einem der Ansprüche 1 bis 4, wobei die Führungseinrichtung auf jedem Kettenglied eine Führungsrolle ist.

6. Gliederkettenförderer nach Anspruch 5, bei welchem die Führungsrolle fest auf jedem Kettenglied angebracht ist.

7. Gliederkettenförderer nach einem der Ansprüche 1 bis 6, bei welchem das Steuerkurvenprofil auf der Innenseite des Bewegungspfades der Kette angeordnet ist.

8. Gliederkettenförderer nach einem der Ansprüche 1 bis 7, mit Gliedern, die durch gekapselte Nadelrollen miteinander verbunden sind.

9. Gliederkettenförderer nach einem der Ansprüche 1 bis 8, bei welchem die Kette vorgespannt ist.

10. Endlosgliederkettenförderer zum Mitführen von Gegenständen, an denen ein Herstellungsprozess mittels Prozesseinrichtungen durchgeführt werden soll, an denen die Gegenstände vorbeibewegt werden, wenn die Gliederkette angetrieben wird, dadurch gekennzeichnet, dass die Gliederkette durch eine Gliederkettenführung nach einem der Ansprüche 1 bis 4 auf im Abstand angeordnete Kettenräder geführt wird, um Sehnen-Effekte zu beseitigen, und die Kette vorgespannt ist, wodurch eine Bewegung der Glieder an den Prozesseinrichtungen vorbei entlang eines unveränderlichen Pfades erfolgt.

11. Vorrichtung nach Anspruch 10, bei welcher mindestens ein Kettenrad ein Antriebskettenrad zum Antreiben der Gliederkette ist.

12. Vorrichtung nach Anspruch 10 oder 11, bei welcher jedes Kettenrad weniger als zehn Zähne aufweist.

13. Vorrichtung nach Anspruch 12, bei welcher jedes Kettenrad sechs Zähne aufweist.

14. Vorrichtung nach Anspruch 12 oder 13, bei welcher die Glieder der Kette ausreichend lang sind, so dass die maximale Anzahl von Kettengliedern, die zu einem beliebigen Zeitpunkt mit einem Kettenrad in Eingriff stehen, vier ist.

15. Vorrichtung nach einem der Ansprüche 10 bis 14, bei welcher die langen Glieder der Gliederkette durch gekapselte Lager miteinander verbunden sind.

16. Vorrichtung nach einem der Ansprüche 10 bis 15, bei welcher die Gliederkette in Schritten von einer Kettengliedlänge schrittweise an den Prozesseinrichtungen vorbei bewegt wird.

17. Vorrichtung nach Anspruch 16, bei welcher die Prozesseinrichtung auf den von der Gliederkette mitgeführten Gegenstand einwirkt, während das Kettenglied zwischen Vorwärtsbewegungsschritten stationär ist.

18. Vorrichtung nach einem der Ansprüche 10 bis 17, bei welcher die Gliederkette Führungseinrichtungen trägt, die von Rollen gebildet werden, welche auf dem Steuerkurvenprofil laufen.

19. Vorrichtung nach einem der Ansprüche 10 bis 18, bei welcher eine Steuerkurvenplatte einen allgemein geraden Abschnitt, einen kreisförmigen Abschnitt an jedem Kettenrad und einen gekrümmten Übergangsabschnitt aufweist, der den geraden Abschnitt mit dem kreisförmigen Abschnitt an jedem Kettenrad verbindet, wobei der gekrümmte Übergangsabschnitt das besagte Steuerkurvenprofil bildet.

20. Vorrichtung nach Anspruch 18 oder 19, bei welcher das Steuerkurvenprofil auf der Innenseite des Endlosgliederkettenpfades liegt.

21. Vorrichtung nach einem der Ansprüche 10 bis 20, bei welcher die Kettenglieder Halter für Tuben zum Befüllen mit Zahnpasta und zum anschließenden Verschließen durch die Prozesseinrichtungen tragen.

**Revendications**

1. Guide pour chaîne à maillons pour une chaîne à maillons passant autour d'au moins une roue, dans lequel chaque maillon de chaîne transporte des moyens de guidage et dans la région où la chaîne s'engrène avec une roue, un profil de came est prévu avec lequel les moyens de guidage coopèrent pour amener le maillon de chaîne s'engrenant avec la roue à suivre un chemin de transition, caractérisé en ce que, de façon à éliminer l'effet rectiligne normalement associé aux chaînes à maillons et aux roues, le chemin de transition défini par la voie de came est calculé pour éliminer l'effet rectiligne à partir du rayon de cercle primitif (r) de la roue, de l'angle de paramètre ($\alpha$) sous-tendu par le maillon de chaîne en ses centres instantanés dans la position initiale de son chemin de transition prévu, et de la longueur (L) du maillon de chaîne, de sorte que le rapport des vitesses de jonctions s'engrenant avec le cercle primitif du pignon de chaîne et des jonctions se trouvant sur le chemin de la chaîne à maillons avant d'atteindre le chemin de transition prévu est constant.

2. Guide pour chaîne à maillons selon la revendication 1, dans lequel, pour qu'un maillon soit guidé à partir d'un chemin de mouvement en ligne droite sur la roue, le chemin de transition est calculé, en coordonnées cartésiennes, conformément aux équations :

$$(x - r\cos(\omega t + \alpha + 90))^2 + (y - r\sin(\omega t + \alpha + 90))^2 = L^2$$

$$(x + st - (L + x_{13}))^2 + (y - e)^2 = L^2$$

3. Guide pour chaîne à maillons selon la revendication 1, dans lequel le chemin de transition est calculé, pour qu'un maillon soit guidé à partir d'un chemin de mouvement en ligne droite sur la roue, conformément au procédé donné dans l'annexe 1 exposé ci-dessus.

4. Guide pour chaîne à maillon selon la revendication 1, dans lequel le chemin de transition est calculé, pour qu'un maillon soit guidé à partir d'un chemin de mouvement courbe sur la roue, conformément au procédé donné dans l'annexe 2 exposé ci-dessus ou avec les équations de contrainte simultanées

$$(x - x_A)^2 + (y - y_A)^2 - L^2 = 0$$

$$(x - x_C)^2 + (y - y_C)^2 - L^2 = 0$$

et

$$(\dot{x}_A{}^2 + \dot{y}_A{}^2) = (G)^2(\dot{x}_C{}^2 + \dot{y}_C{}^2)$$

où le point désigne une dérivée par rapport à une variable indépendante.

5. Transporteur à chaîne à maillons intégrant le guide pour chaîne à maillons selon l'une quelconque des revendications 1 à 4, dans lequel les moyens de guidage sur chaque maillon de chaîne sont un rouleau de guidage.

6. Transporteur à chaîne à maillons selon la revendication 5, dans lequel le rouleau de guidage est installé de façon fixe sur chaque maillon de chaîne.

7. Transporteur à chaîne à maillons selon l'une quelconque des revendications 1 à 6, dans lequel le profil de came est positionné à l'intérieur du chemin de mouvement de la chaîne.

8. Transporteur à chaîne à maillons selon l'une quelconque des revendications 1 à 7, dont les maillons sont raccordés par des roulements à aiguilles fermés.

9. Transporteur à chaîne à maillons selon l'une quelconque des revendications 1 à 8, dans lequel la chaîne est précontrainte.

**10.** Transporteur à chaîne à maillons sans fin pour transporter des objets sur lesquels une tâche de production doit être effectuée par des moyens de traitement devant lesquels les objets sont déplacés quand la chaîne à maillons est entraînée, caractérisé en ce que la chaîne à maillons est guidée sur des roues espacées par un guide pour chaîne à maillons selon l'une quelconque des revendications 1 à 4 pour éliminer des effets rectilignes, et la chaîne est précontrainte, de sorte que le mouvement des maillons devant les moyens de traitement a lieu suivant un chemin invariable.

**11.** Dispositif selon la revendication 10, dans lequel au moins une roue est une roue d'entraînement pour entraîner la chaîne à maillons.

**12.** Dispositif selon la revendication 10 ou 11, dans lequel chaque roue a moins de dix dents.

**13.** Dispositif selon la revendication 12, dans lequel chaque roue a six dents.

**14.** Dispositif selon la revendication 12 ou 13, dans lequel les maillons de la chaîne sont suffisamment longs pour que le nombre maximal de maillons de chaîne s'engrenant dans une roue à la fois soit quatre.

**15.** Dispositif selon l'une quelconque des revendications 10 à 14, dans lequel les maillons longs de la chaîne à maillons sont raccordés par l'intermédiaire de paliers fermés.

**16.** Dispositif selon l'une quelconque des revendications 10 à 15, dans lequel la chaîne à maillons est positionnée par étapes de la longueur d'un maillon de chaîne devant les moyens de traitement.

**17.** Dispositif selon la revendication 16, dans lequel les moyens de traitement agissent sur l'objet transporté par la chaîne à maillons tandis que le maillon de chaîne est stationnaire entre les étapes de positionnement.

**18.** Dispositif selon l'une quelconque des revendications 10 à 17, dans lequel la chaîne à maillons transporte des moyens de guidage composés de rouleaux qui circulent sur le profil de came.

**19.** Dispositif selon l'une quelconque des revendications 10 à 18, dans lequel un plateau de came a généralement une section droite, une section circulaire au niveau de chaque roue, et une section de transition courbe raccordant la section droite à la section circulaire au niveau de chaque roue, la section de transition courbe constituant ledit profil de came.

**20.** Dispositif selon la revendication 18 ou 19, dans lequel le profil de came se trouve à l'intérieur du chemin des maillons de chaîne sans fin.

**21.** Dispositif selon l'une quelconque des revendications 10 à 20, dans lequel les maillons de chaîne transportent des supports pour des tubes à remplir avec du dentifrice et à fermer par les moyens de traitement.

## Fig.1. *(prior art)*

a

b

c

## Fig.2. *(prior art)*

## Fig.3.

a

b

c

d

## Fig.2a. (prior art)

# Fig.4.

# Fig.5.

# Fig.6.

# Fig.7.

# Fig.8.

# Fig.9.

# Fig.10.

# Fig.11.

# Fig.12.

14(14A)

# Fig.13.

a

34A

18

b

36

34B